# EUROPEAN PATENT APPLICATION

(11) **EP 4 841 752 A1**
(43) Date of publication of application: **18.11.2026**
(21) Application number: 26175128.3
(22) Date of filing: 28.04.2026
(51) Int. Cl.: H01M 10/613, H01M 10/647, H01M 10/653, H01M 10/658, H01M 10/6556

(54) **CELL ASSEMBLY AND BATTERY DEVICE INCLUDING THE SAME**

(30) Priority: 02.05.2025 KR 20250058115; 27.11.2025 KR 20250184107
(71) Applicant: SK On Co., Ltd., Seoul 03161 (KR)
(72) Inventor: SON, Jin Woo, 34124 Daejeon (KR); LEE, Tae Gu, 34124 Daejeon (KR)
(74) Representative: Prüfer & Partner mbB Patentanwälte · Rechtsanwälte

(57) **Abstract**

A cell assembly includes a cell unit including at least one battery cell, a case including an accommodation space accommodating the cell unit, and a first insulating member disposed inside the case, wherein the first insulating member is disposed between the cell unit and the case.

## Description

### TECHNICAL FIELD

The disclosure and implementations disclosed in this patent document generally relate to a cell assembly and a battery device including the same.

### BACKGROUND

Unlike primary batteries, secondary batteries may be charged with and discharged of electricity, and thus are used as power sources for devices within various fields, such as digital cameras, mobile devices, electric vehicles, and energy storage systems (ESS). Secondary batteries include various types, such as lithium secondary batteries, nickel-cadmium batteries, and nickel-metal hydride batteries, and may be manufactured as flexible pouch-type battery cells or rigid can-type battery cells. Can-type battery cells may be classified as prismatic battery cells, cylindrical battery cells, coin-type battery cells, etc. according to external shapes thereof, and respective can-type battery cells may be applied variously to suit devices and environments in which battery cells are used.

Secondary batteries, such as lithium-ion batteries, may include a positive plate, a negative plate, a separator, an electrolyte, etc. The positive plate and the negative plate are arranged with an insulating separator in between, and charging or discharging may be performed by the movement of ions through the electrolyte.

A plurality of battery cells may be arranged in a predetermined direction to form a cell assembly. The cell assembly may be disposed inside a module housing to form a battery module, and a plurality of battery modules may be disposed inside a pack frame to form a battery pack. Recently, a configuration in which a cell assembly is disposed directly in a pack housing, etc., has been proposed.

### SUMMARY

When a battery device is used for a long period of time, heat may be generated by a battery cell. Such a rise in the temperature of the battery cell may shorten the lifespan of a battery device and reduce efficiency of the battery device. Furthermore, if a thermal runaway situation occurs in a single cell assembly, heat may propagate to an adjacent cell assembly, causing a thermal runaway phenomenon to spread. Accordingly, a cooling structure is required to maintain a stable temperature inside the cell assembly, while blocking the propagation of heat or flames between cell assemblies.

According to an aspect of the present disclosure, a battery cell inside a cell assembly may be effectively protected.

According to an aspect of the present disclosure, the diffusion of heat generated inside a cell assembly may be prevented.

According to an aspect of the present disclosure, a cell assembly inside a battery device may be cooled more efficiently.

The cell assembly and the battery device including the same according to the present disclosure may be widely applied to devices in green technology fields, such as electric vehicles, battery charging stations, and other applications utilizing batteries, such as solar power generation and wind power generation. Furthermore, the cell assembly and the battery device including the same according to the present disclosure may be used in eco-friendly electric vehicles, hybrid vehicles, etc., to prevent climate change by suppressing air pollution and greenhouse gas emissions.

In some embodiments of the present disclosure, a cell assembly includes: a cell unit including at least one battery cell; a case including an accommodation space accommodating the cell unit; and a first insulating member disposed inside the case, wherein the first insulating member is disposed between the cell unit and the case.

The case may include a main body portion in which the cell unit is accommodated and a panel portion disposed on at least one side of the main body portion in a first direction, the first direction being a length direction of the main body portion.

The main body portion may have a shape in which at least one side thereof in the first direction is open, and the panel portion may be connected to the open side of the main body portion.

The main body portion and the panel portion may be integrally formed.

The first insulating member may be disposed to cover a first side surface of the cell unit and a second side surface facing the first side surface, and the first side surface and the second side surface may form both side surfaces of the cell unit in a thickness direction.

The first insulating member may be disposed to additionally cover a first surface of the cell unit, the first side surface and the second side surface may each be perpendicular to the first surface of the cell unit, and the first insulating member may be formed integrally.

The panel portion may include a slit opening through which an electrode lead of the cell unit is drawn out to the outside of the case.

The panel portion may include a support plate connected to the main body portion and an insulating portion formed of an insulating material.

The case may include a metal material.

The main body portion may include a surrounding portion forming a space in which the cell unit is accommodated and a heat dissipation portion which is a surface connected to the surrounding portion, and the first insulating member may be disposed between the surrounding portion and the cell unit.

The first insulating member may have a shape corresponding to that of the surrounding portion.

The heat dissipation portion may include a heat dissipation hole dissipating heat from the inside of the case.

The cell assembly may further include: a heat transfer member disposed between the cell unit and the case, wherein the heat transfer member is disposed to face the heat dissipation portion of the case.

The first insulating member may include at least some of mica, silicate, ceramic, glass fiber, and mineral fiber.

In some embodiments of the present disclosure, a battery device includes: a plurality of cell assemblies; and a device housing accommodating the plurality of cell assemblies, wherein at least one of the plurality of cell assemblies includes: a cell unit including at least one battery cell; a case including an accommodation space accommodating the cell unit, wherein at least one surface of the case is open; and a first insulating member disposed inside the case, wherein the first insulating member is disposed between the cell unit and the case.

The battery device may further include: a second insulating member located between at least some of the plurality of cell assemblies.

The battery device may further include: a cooling member cooling the plurality of cell assemblies.

The case of the plurality of cell assemblies may include a main body portion in which the cell unit is accommodated and a panel portion disposed on at least one side surface of the main body portion in a first direction, the first direction being a length direction of the main body portion, the main body portion may include a surrounding portion forming a space in which the cell unit is accommodated and a heat dissipation portion which is a surface connected to the surrounding portion, the first insulating member may be disposed between the surrounding portion and the cell unit, and the heat dissipation portion may be disposed to face the cooling member.

The case may be formed integrally and includes an open first end, and the first end may be coupled to the cooling member.

A heat transfer member may be disposed between the case and the cooling member.

### BRIEF DESCRIPTION OF DRAWINGS

Certain aspects, features, and advantages of the present disclosure are illustrated by the following detailed description with reference to the accompanying drawings.
FIG. 1 is a schematic perspective view illustrating a cell assembly according to an embodiment;
FIG. 2 is an exploded perspective view of the cell assembly illustrated in FIG. 1;
FIG. 3 is a cross-sectional view taken along line I-I' of FIG. 1;
FIG. 4 is a modified example of the cell assembly illustrated in FIG. 2;
FIG. 5 is an exploded perspective view of a cell assembly according to another embodiment;
FIG. 6 is a cross-sectional view taken along line II-II' of FIG. 5;
FIG. 7 is an exploded perspective view schematically illustrating a battery device according to an embodiment;
FIG. 8 is a cross-sectional view taken along line III-III' of FIG. 7; and
FIG. 9 is a cross-sectional view of a battery device according to another embodiment.

### DETAILED DESCRIPTION

Hereafter, the present disclosure will be described in detail with reference to the accompanying drawings. However, this is merely an example and the present disclosure is not limited to the specific embodiments described herein.

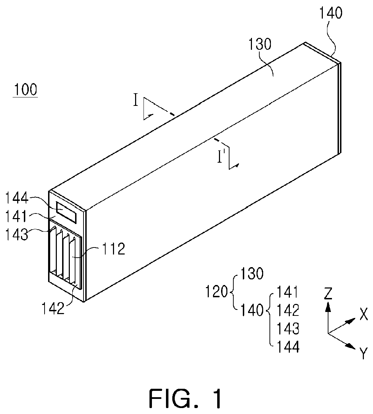

First, a cell assembly 100 according to an embodiment of the present disclosure will be described with reference to FIGS. 1 to 3.

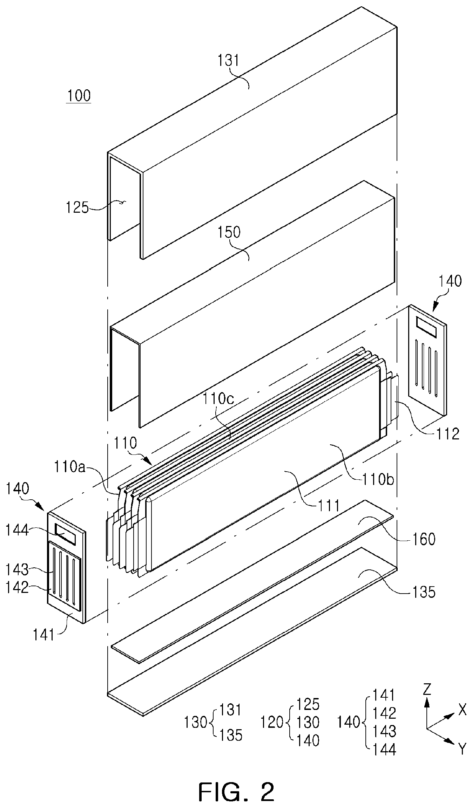

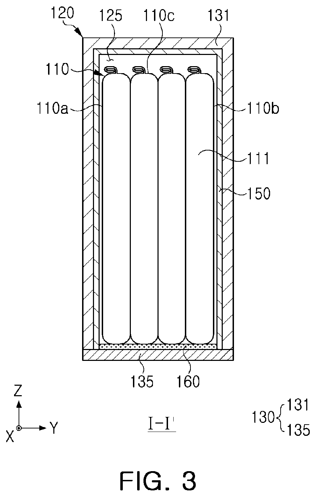

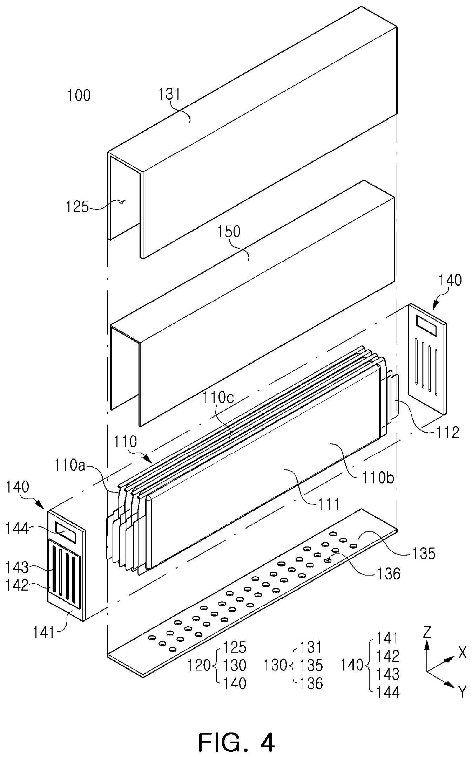

FIG. 1 is a schematic perspective view of the cell assembly 100 according to an embodiment, FIG. 2 is an exploded perspective view of the cell assembly 100 illustrated in FIG. 1, FIG. 3 is a cross-sectional view taken along line I-I' of FIG. 1, and FIG. 4 is a modified example of the cell assembly 100 illustrated in FIG. 2.

The cell assembly 100 according to an embodiment of the present disclosure may include a cell unit 110 including at least one battery cell 111, a case 120 including an accommodation space 125 for accommodating the cell unit 110 and a first insulating member 150 disposed inside the case 120. The first insulating member 150 may be disposed between the cell unit 110 and the case 120.

The cell unit 110 may include at least one battery cell 111. The cell unit 110 may be accommodated in the accommodation space 125 of the case 120. The cell unit 110 may refer to the entirety of one or more battery cells 111 accommodated inside the case 120. That is, the cell unit 110 may refer to an assembly of at least one battery cell 111. In other words, a state in which at least one battery cell 111 is arranged may be expressed as one cell unit 110. In FIGS. 1 to 3, the cell unit 110 is illustrated as including four battery cells 111, but is not limited thereto, and the cell unit 110 may include a single battery cell 111. When the cell unit 110 includes a plurality of battery cells 111, the plurality of battery cells 111 may be arranged in various manners. For example, the plurality of battery cells 111 may be arranged in a second direction Y, a thickness direction of the case 120.

The battery cell 111 may be configured as a secondary battery that may be charged and discharged. The battery cell 111 may have a form in which an electrode assembly and an electrolyte are included within a cell casing. As an example, the battery cell 111 may include a lithium-ion (Li-ion) battery or a nickel-metal hydride (Ni-MH) battery, but the types are not limited thereto.

The battery cell 111 may have a form in which an electrode assembly and an electrolyte are included within a cell casing forming an outer casing. The battery cells 111 may each include an electrode assembly including a positive electrode, a negative electrode, and a separator. The electrode assembly may be configured such that the positive electrode and the negative electrode are disposed with the separator interposed therebetween, while the wide surfaces thereof face each other. The separator may be configured to prevent an electrical short circuit between the positive and negative electrodes and to allow for the flow of ions. For example, the separator may include a porous polymer film or a porous nonwoven fabric. In addition, the electrode assembly may be accommodated in the cell casing in various manners, such as a stacking type, a jelly roll type formed by winding in a predetermined direction, a zigzag folding type, or a stack-folding type.

The electrode lead 112 may be electrically connected to the electrode assembly and may be exposed to the outside of the cell casing through a terrace portion. A portion of the electrode lead 112 may be drawn out or exposed to the outside of the cell casing.

The battery cell 111 may be a pouch-type, prismatic-type, or cylindrical secondary battery depending on the structure of the cell casing. In an embodiment, each of the plurality of battery cells 111 may be provided in a pouch form and may be arranged side by side and connected to one another in series or in parallel to be accommodated inside the case 120 of the cell assembly 100.

The case 120 of the cell assembly 100 may include the accommodation space 125 for accommodating the cell unit 110. The case 120 of the cell assembly 100 may accommodate at least one battery cell 111 in the accommodation space 125. The case 120 may accommodate, support, and protect the cell unit 110 therein. The case 120 may include a material having sufficient rigidity to protect the internal cell unit 110 from external impact or environment and to stably maintain the external shape of the cell assembly 100.

The case 120 may be formed of a material having a high melting point in order to prevent heat from spreading to an adjacent cell assembly 100 in the event of a thermal runaway or fire occurring within one cell assembly 100. For example, the case 120 may be formed of a material having a melting point of 600°C or higher. More specifically, the case 120 may be formed of a material having a melting point of 660°C or higher, 700°C or higher, or 750°C or higher.

According to an embodiment, the case 120 may include a metal material. For example, at least a portion of the case 120 may be formed of a metal material, such as aluminum, iron, or stainless steel. However, the material of the case 120 is not limited thereto and may be formed of any material having the rigidity to maintain the shape of the cell assembly 100 and protect the cell unit 110 therein.

According to an embodiment, the thickness of the case 120 may be 0.05 mm or more and 5 mm or less. More specifically, the thickness of the case 120 may be 0.1 mm or more and 3 mm or less, or 0.15 mm or more and 2.5 mm or less. If the thickness of the case 120 is less than 0.05 mm, it may be difficult to effectively withstand mechanical and thermal stresses occurring during external impact or thermal runaway, which may degrade protective performance of the case 120. On the other hand, if the thickness exceeds 5 mm, the weight and volume of the case 120 may increase excessively, which may increase the total weight of the cell assembly 100 and decrease energy density. However, this is merely an example, and the thickness of the case 120 is not limited thereto; the thickness and shape of the case 120 may be designed to vary as needed.

The case 120 may include a main body portion 130 in which the cell unit 110 is accommodated and a panel portion 140 disposed on at least one side of the main body portion 130 in the first direction X, the length direction of the main body portion 130. The panel portion 140 may form the side surface of the case 120 in the first direction X. In other words, a portion forming the accommodation space 125 in which the cell unit 110 is accommodated may be referred to as the main body portion 130, and a portion forming the side surface of the case 120 in the first direction X may be referred to as the panel portion 140.

The main body portion 130 may have a structure surrounding at least a portion of the outer circumferential surface of the cell unit 110. The main body portion 130 may have a shape covering at least three sides of the cell unit 110. The main body portion 130 may have a shape in which at least one side is open. The cell unit 110 may be inserted into the main body portion 130 through an open side of the main body portion 130.

The main body portion 130 may include a material having sufficient rigidity to protect the cell unit 110 from external impact or environment and to stably maintain the external shape of the cell assembly 100. For example, the main body portion 130 may be formed of a metal material, such as aluminum, iron, or stainless steel. However, the material of the main body portion 130 is not limited thereto, and the main body portion 130 may be formed of any material having sufficient rigidity to maintain the external shape of the cell assembly 100 and protect the cell unit 110 therein.

The panel portion 140 may be connected to the main body portion 130 and may form the side surface of the case 120. The panel portion 140 may be disposed on one side or both sides of the case 120 in the first direction X. In other words, the panel portion 140 may form the side surface of the case 120, while covering at least one surface of the cell unit 110 in the first direction X.

The panel portion 140 may include a support plate 141 connected to the main body portion 130 and an insulating portion 142 formed of an insulating material. The support plate 141 may be connected to the main body portion 130 of the case 120 to form the side surface of the case 120. The support plate 141 may form at least a portion of the exterior of the case 120. The support plate 141 may be connected to the side surface of the main body portion 130 in the first direction X so as to be disposed to cover at least one side surface of the cell unit 110. For example, the support plate 141 may cover the front and rear surfaces of the cell unit 110 to protect the front and rear surfaces of the cell unit 110. The front and rear surfaces of the cell unit 110 may be surfaces on which the electrode leads 112 are disposed.

The support plate 141 may include a material having sufficient rigidity to protect the cell unit 110 from external impact or environment and to stably maintain the external shape of the cell assembly 100. For example, the support plate 141 may be formed of a metal material, such as aluminum, iron, or stainless steel. In addition, according to an embodiment, the support plate 141 may be formed of the same material as that of the main body portion 130. When the support plate 141 and the main body portion 130 are formed of the same material, material management may be easy and manufacturing costs may be reduced. However, the material of the support plate 141 is not limited thereto, and the support plate 141 may not be necessarily formed of the same material as that of the main body portion 130. The support plate 141 may be formed of any material having sufficient rigidity to maintain the external shape of the cell assembly 100 and protect the cell unit 110 inside the case 120.

The insulating portion 142 may be formed of an electrically insulating material. The panel portion 140 may be disposed to face the electrode lead 112 of the cell unit 110. For example, if the electrode lead 112 is disposed at both ends of the cell unit 110 in the first direction X, the panel portion 140 may be disposed at each end of the cell unit 110 in the first direction X and coupled to the electrode lead 112. Here, the electrode lead 112 may be drawn out to the outside of the case 120 through a slit opening 143 of the panel portion 140. The insulating portion 142 may be disposed between the electrode lead 112 and the support plate 141 to electrically insulate the electrode lead 112 and the support plate 141 from each other. As an example, the insulating portion 142 may be hook-coupled or fused to the support plate 141 so as to be fixed. The method by which the insulating portion 142 is coupled to the support plate 141 may vary.

The panel portion 140 may include the slit opening 143 through which the electrode lead 112 of the cell unit 110 is drawn out to the outside of the case 120. The electrode lead 112 of the battery cell 111 may be exposed to the outside of the case 120 through the panel portion 140. The electrode lead 112 may be exposed to the outside of the case 120 through the slit opening 143. The slit opening 143 may have a number and shape corresponding to that of the battery cells 111 and electrode leads 112 accommodated in the main body portion 130. The electrode lead 112 may be electrically connected after passing through the slit opening 143. For example, the electrode leads 112 may be bent and overlap each other in a certain region so as to be connected. The electrode leads 112 may be directly welded to each other so as to be electrically connected. However, this is merely an embodiment, and the electrode leads 112 may also be electrically connected to each other via a busbar (not illustrated). In this manner, the electrode leads 112 may be connected in various manners.

According to an embodiment, the panel portion 140 may include a venting portion 144 discharging gas occurring in the accommodation space 125 of the case 120 externally. The panel portion 140 may include a venting portion 144 configured to allow gas occurring in the internal space of the cell assembly 100 to be discharged. The venting portion 144 may perform a venting function to safely discharge internal gas or flames externally when the internal pressure of the case 120 rises above a predetermined value. The venting portion 144 may be formed in at least one region of the panel portion 140. For example, the venting portion 144 may be formed at a location not interfering with the electrode lead 112 of the battery cell 111 drawn out through the slit opening 143 of the panel portion 140. In addition, a plurality of venting portions 144 may be formed. The venting portion 144 may be configured to be maintained in a sealed state under normal conditions to prevent the introduction of external foreign matter and then be ruptured or opened in the event of an abnormal situation, such as thermal runaway, to discharge internal high-temperature gas and flames externally. If necessary, the venting portion 144 may include a rupture portion, a bursting panel, or a pressure-relief opening structure.

According to an embodiment, the cell assembly 100 may additionally include a sensor portion detecting an internal environment. The sensor portion may be disposed in the case 120 of the cell assembly 100. For example, the sensor portion may detect the occurrence of at least one of the temperature, pressure, and gas in the cell assembly 100. The sensor portion may monitor whether the internal temperature of the cell assembly 100 rises above a threshold value and may be configured to detect signs of thermal runaway early to provide a warning signal to the system or perform a protective operation. In addition, the sensor portion may detect an increase in internal pressure to induce the operation of the venting portion 144 or other protective structure.

The first insulating member 150 may be disposed inside the case 120. The first insulating member 150 may be disposed inside the case 120 to block or delay the propagation of heat between the cell assemblies 100. The first insulating member 150 may be disposed inside the case 120 to prevent heat generated inside one cell assembly 100 from being transferred to an adjacent cell assembly 100 through the case 120. In other words, if thermal runaway occurs in one cell assembly 100, the first insulating member 150 disposed inside the corresponding cell assembly 100 may prevent high-temperature heat or flames from spreading to the outside of the case 120. The first insulating member 150 may be disposed between the cell unit 110 and the case 120 to prevent heat or flames generated in the cell unit 110 from being transferred to the case 120. That is, the first insulating member 150 may be accommodated in the accommodation space 125 of the case 120 and may be interposed between the cell unit 110 and the case 120.

When the first insulating member 150 is disposed inside the case 120, the insulating performance may be improved. For example, when a plurality of cell assemblies 210 in which the first insulating member 150 is disposed inside the case 120 are arranged, heat inside one cell assembly 100 may need to pass through two first insulating members 150 to be transferred to an adjacent cell assembly 100. Accordingly, a heat transfer path between the cell assemblies 100 may be lengthened and the overall thermal conduction resistance may increase, thereby effectively delaying heat propagation.

In addition, since the first insulating member 150 is interposed between the cell unit 110 and the case 120 inside the case 120, the first insulating member 150 may directly block heat generated in the cell unit 110 from being conducted to the case 120. Accordingly, heat may be blocked more efficiently. Furthermore, when the first insulating member 150 is disposed inside the case 120, the insulating member may be protected from external impact or moisture, and thus, the insulating properties may be stably maintained even during long-term use.

According to an embodiment, the first insulating member 150 may include a material having excellent thermal insulation properties. The first insulating member 150 may be formed of an insulating material having low thermal conductivity. In addition, the first insulating member 150 may have heat resistance and fire resistance to withstand high heat and flames generated when an event occurs. The first insulating member 150 may have a high melting point. For example, the first insulating member 150 may include a material having a thermal conductivity of 30 W/m·K or less, 10 W/m·K or less, or 1 W/m·K or less. However, this is merely an example, and the first insulating member 150 may be formed of various known materials as long as the materials have thermal insulation and heat resistance. In addition, the first insulating member 150 may have the form of a pad, plate, or sheet.

According to an embodiment, the first insulating member 150 may include at least some of mica, silicate, ceramic, glass fiber, and mineral fiber. However, the material of the first insulating member 150 is not limited thereto, and a combination of a plurality of materials may be applied as needed.

The first insulating member 150 may cover at least a portion of the cell unit 110. For example, the first insulating member 150 may be disposed to cover a first side surface 110a of the cell unit 110 and the second side surface 110b facing the first side surface 110a. The first side surface 110a and the second side surface 110b may form both side surfaces of the cell unit 110 in the thickness direction Y. In other words, the first insulating member 150 may be disposed to cover the first side surface 110a and the second side surface 110b, which are both side surfaces of the cell unit 110 in the thickness direction.

The first insulating member 150 may be disposed to cover the wide surface of the cell unit 110. The first insulating member 150 may be disposed between the wide surface of the cell unit 110 and the case 120 to effectively prevent heat generated in the cell unit 110 from being transferred to the adjacent cell assembly 100.

In addition, the first insulating member 150 may be disposed to additionally cover a first surface 110c of the cell unit 110. The first side surface 110a and the second side surface 110b may each be perpendicular to the first surface 110c of the cell unit 110. According to an embodiment, the first surface 110c of the cell unit 110 may refer to an upper surface of the cell assembly 100 in the height direction Z. That is, the first insulating member 150 may be disposed to cover the upper surface of the cell unit 110 and both side surfaces of the cell unit 110 in the thickness direction Y. The first insulating member 150 may cover at least three sides of the cell unit 110. The first insulating member 150 may have a shape corresponding to at least three sides of the cell unit 110.

According to an embodiment, the first insulating member 150 may be formed integrally. In other words, when the first insulating member 150 is configured to cover the first side surface 110a, the second side surface 110b, and the first surface 110c of the cell unit 110, the first insulating member 150 may be formed integrally with a U-shaped cross-section. In this case, no gaps or spaces may occur between the parts covering each surface of the cell unit 110, thereby improving the insulating performance. In addition, heat leakage through the corners of the case 120 may be prevented. In addition, in this case, the process of assembling the first insulating member 150 with the cell unit 110 or the first insulating member 150 with the case 120 may be facilitated. However, this is merely an example, and the first insulating member 150 does not necessarily have to be formed integrally. For example, the first insulating member 150 may be formed as a plurality of divided insulating sheets. Each insulating sheet may be coupled to different surfaces of the cell unit 110 so as to be assembled. In this case, the process of forming the first insulating member 150 may be simplified.

According to an embodiment, the first insulating member 150 may be disposed to be in contact with at least one of the cell unit 110 or the case 120. For example, one surface of the first insulating member 150 may be disposed to be in contact with the outer surface of the cell unit 110, and the other surface of the first insulating member 150 may be disposed to be in contact with the inner surface of the case 120.

The first insulating member 150 may be coupled to the cell unit 110. The first insulating member 150 may be coupled to at least a portion of the outer surface of the cell unit 110. For example, the first insulating member 150 may be coupled to the outer surface of the first side surface 110a and the second side surface 110b of the cell unit 110. Alternatively, the first insulating member 150 may be coupled to the first surface 110c of the cell unit 110. In this case, the cell unit 110 may be accommodated in the accommodation space 125 of the case 120 while assembled with the first insulating member 150. This configuration may effectively block the diffusion of heat generated in the cell unit 110 and may simplify the process of coupling the cell unit 110 to the insulating member.

However, the first insulating member 150 does not necessarily have to be coupled to the cell unit 110 and may be coupled to the case 120. For example, the first insulating member 150 may be coupled to the inner surface of the case 120. In this case, the case 120 may form the accommodation space 125 accommodating the cell unit 110 while coupled to the first insulating member 150.

The first insulating member 150 may be manufactured separately from the case 120 and then attached, fixed, or laminated to the inner surface of the case 120 so as to be coupled. Alternatively, the first insulating member 150 may be formed integrally with the case 120. For example, a material having an insulating function may be formed simultaneously during the process of molding the case 120, or the case 120 and the first insulating member 150 may be laminated and integrated.

Meanwhile, the first insulating member 150 may not be coupled to the cell unit 110 or the case 120 but may be simply disposed between the cell unit 110 and the case 120. This is merely an example, and the first insulating member 150 may vary as needed.

The main body portion 130 of the case 120 will be described in more detail below.

According to an embodiment, the main body portion 130 may have a shape in which at least one side thereof in the first direction X is open, and the panel portion 140 may be connected to the open side of the main body portion 130. That is, the main body portion 130 and the panel portion 140 may be formed separately and then connected.

Here, the main body portion 130 may include a surrounding portion 131 forming a space in which the cell unit 110 is accommodated and a heat dissipation portion 135, a surface connected to the surrounding portion 131. A first insulating member 150 may be disposed between the surrounding portion 131 and the cell unit 110.

The surrounding portion 131 may form a space in which the cell unit 110 is accommodated. The surrounding portion 131 may have a structure surrounding at least a portion of the outer circumferential surface of the cell unit 110. For example, the surrounding portion 131 may have a U-shaped cross-sectional shape to cover the first side surface 110a, the second side surface 110b, and the first surface 110c of the cell unit 110.

The first insulating member 150 may have a shape corresponding to that of the surrounding portion 131. For example, if the surrounding portion 131 has a U-shaped cross-sectional shape to cover the side surface and the first surface 110c of the cell unit 110, the first insulating member 150 may also have a U-shaped cross-sectional shape. In this case, the first insulating member 150 may be interposed between the surrounding portion 131 and the cell unit 110 and disposed to face the surrounding portion 131.

According to an embodiment, the first insulating member 150 may not be disposed between the heat dissipation portion 135 and the cell unit 110. The heat dissipation portion 135 may be connected to the surrounding portion 131. The first insulating member 150 may not be disposed between the heat dissipation portion 135 and the cell unit 110. In this case, the heat dissipation portion 135 may function as a passage through which heat inside the case 120 is concentratedly discharged.

As described above, the first insulating member 150 may block heat or flames inside the case 120 from being released to the outside of the case 120. That is, since the external release of heat is restricted on the surface in which the first insulating member 150 is disposed, heat generated inside the cell assembly 100 may be concentrated on and transferred mainly to the surface in which the first insulating member 150 is not disposed. Accordingly, heat inside the cell assembly 100 may be concentrated and discharged externally through the heat dissipation portion 135, and the heat management efficiency of the cell assembly 100 may be improved.

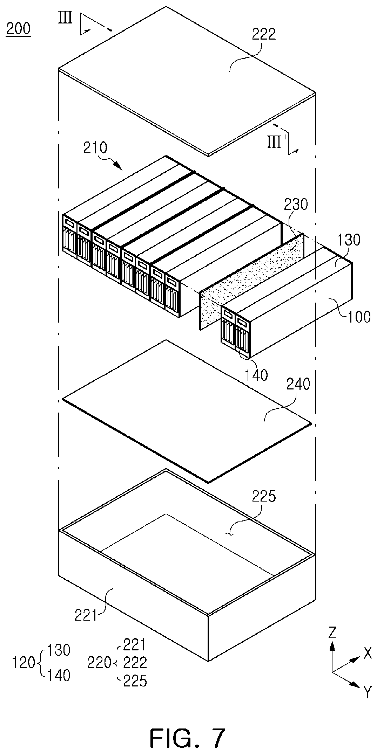

According to an embodiment, the heat dissipation portion 135 may be disposed in a direction not to face the adjacent cell assembly 100. Alternatively, the heat dissipation portion 135 may be disposed to face a cooling member (240 in FIG. 7) disposed outside the cell assembly 100 to increase the heat dissipation efficiency of the cell assembly 100.

A battery device 200 according to an embodiment may additionally include a heat transfer member 160 disposed between the cell unit 110 and the case 120. The heat transfer member 160 may be disposed to face the heat dissipation portion 135 of the case 120. The heat transfer member 160 may be disposed between the heat dissipation portion 135 and the cell unit 110. That is, the heat transfer member 160 may be disposed on a surface in which the first insulating member 150 is not disposed. For example, the first insulating member 150 may be disposed on the surrounding portion 131, and the heat transfer member 160 may be disposed on the heat dissipation portion 135, in which case heat dissipation efficiency of the cell assembly 100 may be improved.

The heat transfer member 160 may contact one surface of the cell unit 110. For example, the heat transfer member 160 may contact the lower surface of the cell unit 110. The heat transfer member 160 may be interposed between the lower surface of the cell unit 110 and the heat dissipation portion 135 to transfer heat generated in the cell unit 110 to the heat dissipation portion 135. For example, the heat transfer member 160 may include a thermally conductive adhesive, and the thermally conductive adhesive may be interposed between the cell unit 110 and the heat dissipation portion 135 to increase the heat transfer efficiency between the cell unit 110 and the heat dissipation portion 135.

According to an embodiment, the heat transfer member 160 may include a material having high thermal conductivity. For example, the heat transfer member 160 may include materials, such as polyurethane, epoxy, silicone, and aluminum. However, this is merely an example of the material of the heat transfer member 160 and is not necessarily limited thereto.

According to an embodiment of the present disclosure, the heat transfer member 160 may have a plate shape. For example, the heat transfer member 160 may be an aluminum plate. In this case, the heat transfer member 160 may perform the function of transferring or dispersing heat generated in the cell unit 110 externally, while simultaneously protecting one surface of the cell unit 110. The aluminum plate may perform the function of transferring heat inside the cell assembly 100 externally, while simultaneously protecting the battery cell 111 from external impact. However, the heat transfer member 160 may have various shapes, such as a sheet shape, in addition to the plate shape.

The heat dissipation portion 135 may include a structure to help dissipate heat. For example, referring to FIG. 4, the heat dissipation portion 135 may have a heat dissipation hole 136 to dissipate heat from the inside of the case 120. For example, a plurality of heat dissipation holes 136 may be formed in the heat dissipation portion 135. The heat dissipation holes 136 may be formed to be spaced apart from each other, and heat from the inside of the case 120 may be discharged to the outside of the case 120 through the heat dissipation holes 136. For example, the plurality of heat dissipation holes 136 may be formed in a circular shape. Alternatively, the heat dissipation holes 136 may have a shape extending in the first direction X of the heat dissipation portion 135. The heat dissipation holes 136 may have various shapes and arrangement structures as long as they help to discharge internal heat externally.

Meanwhile, the surrounding portion 131 and the heat dissipation portion 135 may be formed integrally or they may be formed separately and assembled. For example, when the surrounding portion 131 and the heat dissipation portion 135 are formed integrally, the main body portion 130 may be formed to have a rectangular cross-section with at least one side open in the first direction X. Alternatively, when the surrounding portion 131 and the heat dissipation portion 135 are formed separately, the cell unit 110 may be accommodated in the surrounding portion 131 and the heat dissipation portion 135 may be coupled to the surrounding portion 131, while covering the lower surface of the cell unit 110, to form the main body portion 130. Such a configuration may be selected variously depending on design conditions or manufacturing processes.

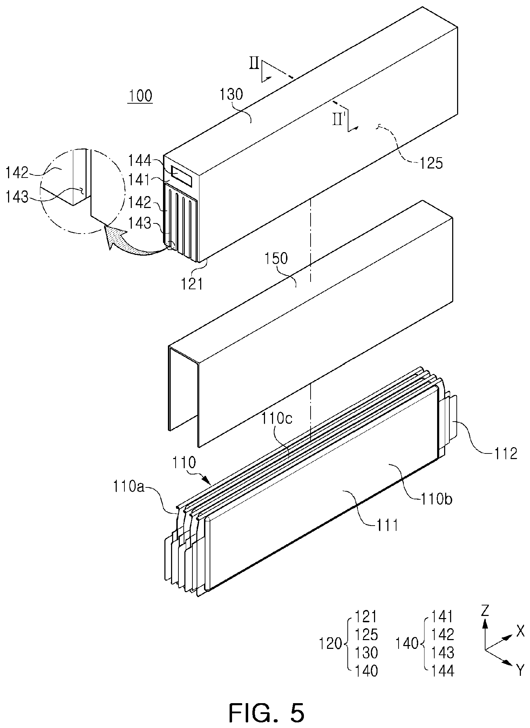

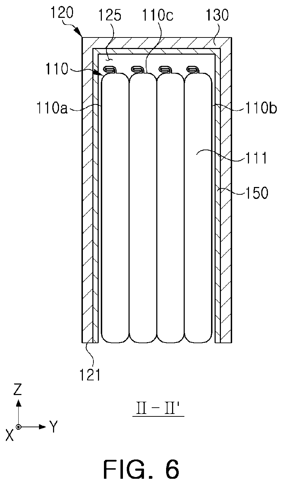

Hereafter, the cell assembly 100 according to another embodiment will be described with reference to FIGS. 5 and 6. FIG. 5 is an exploded perspective view of the cell assembly 100 according to another embodiment, and FIG. 6 is a cross-sectional view taken along line II-II' of FIG. 5.

The cell assembly 100 according to another embodiment differs in the shape of the case 120 when compared to the cell assembly 100 according to the embodiment illustrated in FIGS. 1 to 4. The description of the cell assembly 100 described above with reference to FIGS. 1 to 4, excluding the differences, may also be applied to the cell assembly 100 according to another embodiment illustrated in FIGS. 5 and 6.

The main body portion 130 and the panel portion 140 may be formed integrally. In other words, the case 120 may be formed integrally. The case 120 may be molded as a single product without separate component assembly. The panel portion 140 may constitute the side surface of the case 120.

According to an embodiment, at least one surface of the case 120 may have an open first end 121. For example, as illustrated in FIG. 5, the lower side of the case 120 may be open, in which case the lower open portion of the case 120 may form the first end 121. The cell unit 110 may be inserted into the case 120 and accommodated through the open first end 121 of the case 120.

When the main body portion 130 and the panel portion 140 are formed integrally, a separate coupling process may not be required, and thus, the manufacturing process of the cell assembly 100 may be simplified. In addition, assembly tolerance between parts may be eliminated, so that gaps through which flames, gas, and/or dust leak may not occur. Through this, flames or high-temperature gases generated inside one cell assembly 100 may be prevented from spreading to adjacent cell assemblies 100 through the gap.

In addition, when the main body portion 130 and the panel portion 140 are formed integrally, the number of parts may be reduced, management may be simplified, and manufacturing costs may be reduced.

The panel portion 140 may include the slit opening 143 through which the electrode lead 112 is drawn out. Here, the slit opening 143 may be connected to the first end 121 of the case 120. That is, the slit opening 143 may have a shape extending from the first end 121 in the height direction of the cell assembly 100. When the cell unit 110 is inserted into the accommodation space 125 of the main body portion 130 through the first end 121, the electrode lead 112 may be inserted into the slit opening 143 of the panel portion 140. That is, the slit opening 143 may be connected up to the first end 121 so that the electrode lead 112 does not interfere with the support plate 141 or the insulating portion 142 of the panel portion 140 in the process of inserting the cell unit 110 into the case 120.

Hereafter, the battery device 200 of the present disclosure will be described with reference to FIGS. 7 to 9.

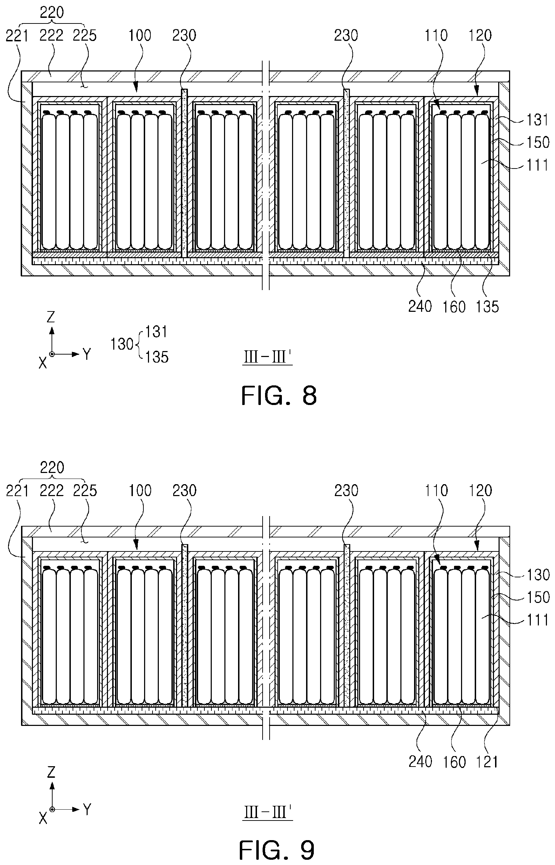

FIG. 7 is an exploded perspective view schematically illustrating the battery device 200 according to an embodiment, FIG. 8 is a cross-sectional view taken along line III-III' of FIG. 7, and FIG. 9 is a cross-sectional view of the battery device 200 according to another embodiment. The battery device 200 illustrated in FIG. 8 and the battery device 200 illustrated in FIG. 9 differ in the shape of the case 120 of the cell assembly 100 accommodated therein. More specifically, the cell assembly 100 illustrated in FIG. 8 includes the heat dissipation portion 135, whereas the case 120 of the cell assembly 100 illustrated in FIG. 9 includes the open first end 121. The description excluding the differences may be applied commonly to both the cell assemblies 100 illustrated in FIGS. 8 and 9.

The battery device 200 of the present disclosure may include a plurality of cell assemblies 210 and a device housing 220 accommodating the plurality of cell assemblies 210. At least one of the plurality of cell assemblies 210 may include the cell unit 110 including at least one battery cell 111, the case 120 having at least one side open and including the accommodation space 125 for accommodating the cell unit 110, and the first insulating member 150 disposed inside the case 120. The first insulating member 150 may be disposed between the cell unit 110 and the case 120.

The description of the cell unit 110, the case 120, and the first insulating member 150 described above with reference to FIGS. 1 to 6 may be applied to each of the plurality of cell assemblies 210 included in the battery device 200 according to the present disclosure.

The plurality of cell assemblies 210 may be arranged in the length direction Y of the battery device 200. Here, each cell assembly 100 may be arranged such that the side surfaces on which the first insulating member 150 is disposed face each other. For example, when the first insulating member 150 is disposed on the side surface of the cell unit 110, adjacent cell assemblies 100 may be arranged such that the side surfaces on which the first insulating member 150 is disposed face each other. That is, at least two first insulating members 150 may be disposed between the cell unit 110 inside one cell assembly 100 and the cell unit 110 inside an adjacent cell assembly 100. Accordingly, heat transfer between the cell assemblies 100 may be effectively blocked.

The device housing 220 may have a shape covering at least a portion of a plurality of cell assemblies 210. The device housing 220 may form at least a portion of the exterior of the battery device 200.

The device housing 220 may include a housing body 221 forming an internal space 225 accommodating the plurality of cell assemblies 210 and a housing cover 222 coupled to the housing body 221. The device housing 220 may have various shapes or segmented structures. As an example, the device housing 220 may be configured to include the housing body 221 having a cross-sectional shape with one side open and the housing cover 222 coupled to the housing body 221 to form the internal space 225. The housing cover 222 may cover the top surface of the cell assembly 100. At least a portion of the device housing 220 may be formed of a material having high thermal conductivity, such as metal. For example, the device housing 220 may include an aluminum material. However, the material of the device housing 220 is not limited thereto, and various materials may be used as long as they have strength and thermal conductivity similar to that of metal, even if they are not metal.

According to an embodiment, the battery device 200 may additionally include a second insulating member 230 located between at least some of the plurality of cell assemblies 210.

The second insulating member 230 may block heat and/or flames generated in any one cell assembly 100 from propagating to an adjacent cell assembly 100. The second insulating member 230 may be formed of an insulating material having low thermal conductivity. In addition, the second insulating member 230 may have heat resistance and fire resistance to withstand high heat and flames generated when an event occurs. As an example, the second insulating member 230 may include at least some of mica, silicate, ceramic, glass fiber, and mineral fiber. However, the material of the second insulating member 230 is not limited thereto, and a combination of a plurality of materials may be applied as needed. The second insulating member 230 may be formed of various known materials as long as they have insulating and heat-resistant properties. In addition, the second insulating member 230 may have the form of a pad, plate, or sheet. The second insulating member 230 may be formed of the same material as that of the first insulating member 150. In this case, the manufacturing process may be simpler. However, the second insulating member 230 may be formed of a material different from that of the first insulating member 150, and thus may vary as needed.

The second insulating member 230 may be located between at least some of the plurality of cell assemblies 210. That is, the second insulating member 230 may be disposed between the case 120 of one cell assembly 100 and the case 120 of an adjacent cell assembly 100. The second insulating member 230 may be interposed between the respective cell assemblies 100 to block or delay the propagation of heat or flames generated in one cell assembly 100 to an adjacent cell assembly 100. One surface of the second insulating member 230 may contact the outer surface of the case 120 of one cell assembly 100, and the other surface of the second insulating member 230 may contact the outer surface of the case 120 of an adjacent cell assembly 100. In other words, the first insulating member 150 may be disposed inside the case 120 of the cell assembly 100, and the second insulating member 230 may be disposed outside the case 120. Through this, the spread of thermal runaway may be effectively blocked and the stability of the battery device 200 may be improved. According to an embodiment, the battery device 200 may further include the cooling member 240 cooling the plurality of cell assemblies 210.

The cooling member 240 may be a cooling plate. The cooling member 240 may be configured separately from the housing body 221 or may be configured as part of the housing body 221. For example, the cooling member 240 may be provided separately from the housing body 221 and coupled to the housing body 221. For example, the cooling member 240 may be accommodated in the housing body 221 and disposed between the housing body 221 and the plurality of cell assemblies 210. The plurality of cell assemblies 210 may be mounted on the cooling member 240.

However, without being limited thereto, and at least a portion of the housing body 221 may contact the cell assemblies 100 to cool the cell assemblies 100. That is, at least one surface of the housing body 221 may function as the cooling member 240. For example, a base plate of the housing body 221 on which the cell assembly 100 is disposed may be used as a cooling channel to cool the cell assembly 100.

According to an embodiment, the case 120 of the plurality of cell assemblies 210 may include the main body portion 130 in which the cell unit 110 is accommodated and the panel portion 140 disposed on at least one side of the main body portion 130 in the first direction X, the length direction. The main body portion 130 may include the surrounding portion 131 forming a space for accommodating the cell unit 110 and the heat dissipation portion 135, a surface connected to the surrounding portion 131. The first insulating member 150 may be disposed between the surrounding portion 131 and the cell unit 110. The heat dissipation portion 135 may be disposed to face the cooling member 240.

According to an embodiment, the first insulating member 150 may not be disposed between the heat dissipation portion 135 and the cell unit 110. That is, the first insulating member 150 may not be interposed between the cell unit 110 and the cooling member 240. The cell assembly 100 may be arranged such that the heat dissipation portion 135 faces the cooling member 240. For example, when the lower surface of the cell assembly 100 is the heat dissipation portion 135, the lower surface of the cell assembly 100 and the cooling member 240 may be coupled to each other. In this case, heat inside the cell assembly 100 may be efficiently transferred to the cooling member 240 through the heat dissipation portion 135. Therefore, the cooling member 240 may cool the cell assembly 100 more effectively. Accordingly, heat generated inside the cell assembly 100 may be blocked from being transferred to the adjacent cell assembly 100 by the first insulating member 150 and may be concentratedly released toward the cooling member 240 through the heat dissipation portion 135. Thus, the thermal management efficiency of the battery device 200 may be improved.

Meanwhile, according to another embodiment, the case 120 is formed integrally and may include the open first end 121. The first end 121 of the case 120 may be coupled to the cooling member 240.

The first end 121 may be directly coupled to the cooling member 240. For example, the case 120 may be coupled to the cooling member 240 through the open first end 121 so that the cooling member 240 may seal the lower portion of the case 120. The cooling member 240 may be coupled to the cell assembly 100, while covering at least one surface of the cell unit 110. Accordingly, the cooling member 240 may effectively cool the cell unit 110, while protecting the cell unit 110 from external impact. In this case, heat inside the cell assembly 100 may be efficiently transferred to the cooling member 240 through the open first end 121. In addition, since a separate bottom cover or fixing member is not required, the number of parts may be reduced and internal space may be saved, which may improve the energy density of the battery device 200.

The heat generated inside the cell unit 110 may be blocked from being transferred to the adjacent cell assembly 100 by the first insulating member 150 and may be concentratedly released toward the cooling member 240 through the first end 121. Accordingly, the thermal management efficiency of the battery device 200 may be improved.

The cell unit 110 inside the cell assembly 100 may contact the cooling member 240. The lower surface of the cell unit 110 may contact the cooling member 240 and may be cooled through heat exchange with the cooling member 240. However, without being limited thereto, and the heat transfer member 160 may be disposed between the cell unit 110 and the cooling member 240. In other words, the heat transfer member 160 may be disposed between the case 120 and the cooling member 240 of the cell assembly 100.

The heat transfer member 160 may be disposed between the case 120 and the cooling member 240. The heat transfer member 160 may be disposed in the direction of the open first end 121. The heat transfer member 160 may be disposed on the surface in which the first insulating member 150 is not disposed. The heat transfer member 160 may be in contact with one surface of the cell unit 110. For example, the heat transfer member 160 may be in contact with the lower surface of the cell unit 110. The heat transfer member 160 is interposed between the lower surface of the cell unit 110 and the cooling member 240 to transfer heat generated in the cell unit 110 to the cooling member 240. For example, the heat transfer member 160 may include a thermally conductive adhesive, and the thermally conductive adhesive may be interposed between the cell unit 110 and the cooling member 240 to increase the heat transfer efficiency between the cell unit 110 and the heat dissipation portion 135.

According to an embodiment, the heat transfer member 160 may include a material having high thermal conductivity. For example, the heat transfer member 160 may include materials, such as polyurethane, epoxy, silicone, and aluminum. However, this is merely an example of the material of the heat transfer member 160 and is not necessarily limited thereto.

According to an embodiment of the present disclosure, the battery cell inside the cell assembly may be effectively protected from external impact.

According to an embodiment of the present disclosure, the diffusion of heat generated inside the case to an adjacent cell assembly may be blocked or delayed.

According to an embodiment of the present disclosure, the cooling efficiency of the battery device may be improved.

Only specific examples of implementations of certain embodiments are described. Variations, improvements and enhancements of the disclosed embodiments and other embodiments may be made based on the disclosure of this patent document.

The present disclosure also relates to the following aspects.

Aspect 1) A cell assembly comprising: a cell unit including at least one battery cell; a case including an accommodation space accommodating the cell unit; and a first insulating member disposed inside the case, wherein the first insulating member is disposed between the cell unit and the case.

Aspect 2) In aspect 1, wherein the case comprises a main body portion in which the cell unit is accommodated and a panel portion disposed on at least one side of the main body portion in a first direction, the first direction being a length direction of the main body portion.

Aspect 3) In aspect 2, wherein the main body portion has a shape in which at least one side thereof in the first direction is open, and the panel portion is connected to the open side of the main body portion.

Aspect 4) In aspect 2, wherein the main body portion and the panel portion are integrally formed.

Aspect 5) In any one of aspects 1 to 4, wherein the first insulating member is disposed to cover a first side surface of the cell unit and a second side surface facing the first side surface, and the first side surface and the second side surface form both side surfaces of the cell unit in a thickness direction.

Aspect 6) In aspect 5, wherein the first insulating member is disposed to additionally cover a first surface of the cell unit, the first side surface and the second side surface are each perpendicular to the first surface of the cell unit, and the first insulating member is formed integrally.

Aspect 7) In any one of aspects 2 to 4, having one or more of the following characteristics (i) and (ii), respectively alone or in combination: (i) the panel portion includes a slit opening through which an electrode lead of the cell unit is drawn out to the outside of the case, and/or (ii) the panel portion comprises a support plate connected to the main body portion and an insulating portion formed of an insulating material.

Aspect 8) In any one of aspects 1 to 7, having one or more of the following characteristics (i) and (ii), respectively alone or in combination: (i) the case includes a metal material, and/or (ii) the first insulating member comprises at least some of mica, silicate, ceramic, glass fiber, and mineral fiber.

Aspect 9) In aspect 2 or 3, wherein the main body portion includes a surrounding portion forming a space in which the cell unit is accommodated and a heat dissipation portion which is a surface connected to the surrounding portion, and the first insulating member is disposed between the surrounding portion and the cell unit.

Aspect 10) In aspect 9, having one or more of the following characteristics (i) to (iii), respectively alone or in combination: (i) the first insulating member has a shape corresponding to that of the surrounding portion, (ii) the heat dissipation portion includes a heat dissipation hole dissipating heat from the inside of the case, and/or (iii) further comprising: a heat transfer member disposed between the cell unit and the case, wherein the heat transfer member is disposed to face the heat dissipation portion of the case.

Aspect 11) A battery device comprising: a plurality of cell assemblies; and a device housing accommodating the plurality of cell assemblies, wherein at least one of the plurality of cell assemblies comprises: a cell unit including at least one battery cell; a case including an accommodation space accommodating the cell unit, wherein at least one surface of the case is open; and a first insulating member disposed inside the case, wherein the first insulating member is disposed between the cell unit and the case.

Aspect 12) In aspect 11, further comprising a second insulating member located between at least some of the plurality of cell assemblies.

Aspect 13) In aspect 11 or 12, further comprising a cooling member cooling the plurality of cell assemblies.

Aspect 14) In aspect 13, wherein the case of the plurality of cell assemblies comprises a main body portion in which the cell unit is accommodated and a panel portion disposed on at least one side surface of the main body portion in a first direction, the first direction being a length direction of the main body portion, the main body portion comprises a surrounding portion forming a space in which the cell unit is accommodated and a heat dissipation portion which is a surface connected to the surrounding portion, the first insulating member is disposed between the surrounding portion and the cell unit, and the heat dissipation portion is disposed to face the cooling member.

Aspect 15) In aspect 13, wherein the case is formed integrally and includes an open first end, the first end is coupled to the cooling member, and a heat transfer member is disposed between the case and the cooling member.

## Claims

1. A cell assembly comprising:
a cell unit including at least one battery cell;
a case including an accommodation space accommodating the cell unit; and
a first insulating member disposed inside the case,
wherein the first insulating member is disposed between the cell unit and the case.

2. The cell assembly of claim 1, wherein the case comprises a main body portion in which the cell unit is accommodated and a panel portion disposed on at least one side of the main body portion in a first direction, the first direction being a length direction of the main body portion.

3. The cell assembly of claim 2, wherein the main body portion has a shape in which at least one side thereof in the first direction is open, and the panel portion is connected to the open side of the main body portion.

4. The cell assembly of claim 2, wherein the main body portion and the panel portion are integrally formed.

5. The cell assembly of any one of claims 1 to 4, wherein the first insulating member is disposed to cover a first side surface of the cell unit and a second side surface facing the first side surface, and
the first side surface and the second side surface form both side surfaces of the cell unit in a thickness direction.

6. The cell assembly of claim 5, wherein
the first insulating member is disposed to additionally cover a first surface of the cell unit,
the first side surface and the second side surface are each perpendicular to the first surface of the cell unit, and
the first insulating member is formed integrally.

7. The cell assembly of any one of claims 2 to 4, having one or more of the following characteristics (i) and (ii), respectively alone or in combination:
(i) the panel portion includes a slit opening through which an electrode lead of the cell unit is drawn out to the outside of the case, and/or
(ii) the panel portion comprises a support plate connected to the main body portion and an insulating portion formed of an insulating material.

8. The cell assembly of any one of claims 1 to 7, having one or more of the following characteristics (i) and (ii), respectively alone or in combination:
(i) the case includes a metal material, and/or
(ii) the first insulating member comprises at least some of mica, silicate, ceramic, glass fiber, and mineral fiber.

9. The cell assembly of claim 2 or 3, wherein
the main body portion includes a surrounding portion forming a space in which the cell unit is accommodated and a heat dissipation portion which is a surface connected to the surrounding portion, and
the first insulating member is disposed between the surrounding portion and the cell unit.

10. The cell assembly of claim 9, having one or more of the following characteristics (i) to (iii), respectively alone or in combination:
(i) the first insulating member has a shape corresponding to that of the surrounding portion,
(ii) the heat dissipation portion includes a heat dissipation hole dissipating heat from the inside of the case, and/or
(iii) further comprising: a heat transfer member disposed between the cell unit and the case, wherein the heat transfer member is disposed to face the heat dissipation portion of the case.

11. A battery device comprising:
a plurality of cell assemblies; and
a device housing accommodating the plurality of cell assemblies,
wherein at least one of the plurality of cell assemblies comprises:
a cell unit including at least one battery cell;
a case including an accommodation space accommodating the cell unit, wherein at least one surface of the case is open; and
a first insulating member disposed inside the case,
wherein the first insulating member is disposed between the cell unit and the case.

12. The battery device of claim 11, further comprising a second insulating member located between at least some of the plurality of cell assemblies.

13. The battery device of claim 11 or 12, further comprising a cooling member cooling the plurality of cell assemblies.

14. The battery device of claim 13, wherein
the case of the plurality of cell assemblies comprises a main body portion in which the cell unit is accommodated and a panel portion disposed on at least one side surface of the main body portion in a first direction, the first direction being a length direction of the main body portion,
the main body portion comprises a surrounding portion forming a space in which the cell unit is accommodated and a heat dissipation portion which is a surface connected to the surrounding portion,
the first insulating member is disposed between the surrounding portion and the cell unit, and
the heat dissipation portion is disposed to face the cooling member.

15. The battery device of claim 13, wherein
the case is formed integrally and includes an open first end,
the first end is coupled to the cooling member, and
a heat transfer member is disposed between the case and the cooling member.
